# EUROPÄISCHE PATENTANMELDUNG

(11) **EP 4 173 815 A1**
(43) Veröffentlichungstag der Anmeldung: **03.05.2023**
(21) Anmeldenummer: 21205224.5
(22) Anmeldetag: 28.10.2021
(51) Int. Cl.: B32B 5/26, A43B 13/02, B32B 5/02, B32B 7/022, B32B 7/03

(54) **ASYMMETRISCHE VERBUNDWERKSTOFFANORDNUNG**

(71) Anmelder: Bond Laminates GmbH, 59929 Brilon (DE)
(72) Erfinder: SEIDEL, Stefan, 33102 Paderborn (DE); ANDERS, Sabrina, 59469 Ense (DE)
(74) Vertreter: Wichmann, Birgid

(57) **Zusammenfassung**

Diese Anmeldung bezieht sich auf asymmetrische Verbundwerkstoffanordnungen mit abstimmbaren anisotropen Eigenschaften einschließlich darauf basierenden Erzeugnissen oder Bauteile.

## Beschreibung

Diese Anmeldung bezieht sich auf asymmetrische Verbundwerkstoffanordnungen mit abstimmbaren anisotropen Eigenschaften einschließlich darauf basierenden Erzeugnissen oder Bauteile.

Im allgemeinen sind Materialien isotrop oder anisotrop. Isotrope Materialien weisen in alle Richtungen gleiche physikalische und chemische Eigenschaften auf. Umgekehrt sind physikalische und chemische Eigenschaften anisotroper Materialien gerichtet und geometrisch abhängig.

Gemäß **https://de.wikipedia.org/wiki/Biegemoment** ist das Verhalten eines schlanken Bauteils bzw. eines Balkens unter Belastung Gegenstand der sogenannten Balkentheorie; siehe auch **https://de.wikipedia.org/wiki/Balkentheorie.** Die Balkentheorie ist ein Teilgebiet der "Technischen Mechanik", worin mithilfe der Festigkeitslehre und der Elastizitätslehre das Verhalten eines schlanken Bauteils bzw. Balkens unter einem belastenden Biegemoment untersucht wird. Anstatt von der Balkentheorie wird deshalb oft bzw. im engeren Sinne von der *Biegetheorie des Balkens* gesprochen. Die Belastungsgrößen sind neben dem Biegemoment auch Längs- und Querkräfte sowie Torsionsmomente. Die Biegung ist zudem von der Geometrie des schlanken Bauteils bzw. Balkens (Querschnitt, evtl. über die Länge veränderlich), seiner Lagerung, sowie der Elastizität des Balken-Werkstoffs abhängig. Festigkeitswerte des Materials bestimmen den Übergang zu plastischer Biegung und den Biegebruch. Um ein Biegen in Materialien zu ermöglichen werden unter anderem Metalle, Polymere oder Verbundwerkstoffe eingesetzt.

Die Steifigkeit ist ebenfalls eine Größe in der "Technischen Mechanik". Gemäß **https://de.wikipedia.org/wiki/Steifigkeit** beschreibt Steifigkeit den Widerstand eines Körpers gegen elastische Verformung durch eine Kraft oder ein Moment, insbesondere Biegemoment oder Torsionsmoment, je nach Beanspruchung. Entsprechend gibt es verschiedene Arten von Steifigkeiten: Dehn-, Schub-, Biege- und Torsionssteifigkeit. Die Steifigkeit eines Bauteils hängt nicht nur von den elastischen Eigenschaften eines Werkstoffs, dem Elastizitätsmodul ab, sondern auch entscheidend von der Geometrie des Bauteils. Die Steifigkeit gilt im linear-elastischen Bereich, also nur für kleine Verformungen, bei denen diese noch proportional zu den wirkenden Kräften sind. Die Steifigkeit ist nicht mit der Festigkeit zu verwechseln. Letztere ist ein Maß für die maximal widerstandene Spannung während einer plastischen Verformung. Im Rahmen der vorliegenden Erfindung wird die Biegesteifigkeit betrachtet und nach der 3-Punkt-Biegemethode gemäß DIN 14125 bestimmt. Die Biegesteifigkeit ist das Elastizitätsmodul E eines zu untersuchenden Werkstoffs, die Einheit ist N/mm². Wie stark die absolute Durchbiegung bzw. Absenkung eines biegebeanspruchten Bauteils bei gegebener Last ist, also das Biegemoment, hängt neben der Biegesteifigkeit auch von der Länge und den Lagerungsbedingungen des zu untersuchenden Bauteils ab.

Das Elastizitätsmodul E von Materialien die Biegekräften ausgesetzt werden und ihre Geometrie beeinflussen wiederum die Steifigkeit. In Abhängigkeit des Aufbaus eines hinsichtlich seiner Biegeeigenschaften zu untersuchenden Materials kann der als Biegebalken bezeichnete Gegenstand isotrope oder anisotrope Eigenschaften aufweisen. Dennoch haben Biegebalken, die aus entsprechenden Materialien hergestellt werden, eine inhärente Unfähigkeit, einen niedrigen Biegewiderstand in einer Richtung und einen hohen Biegewiderstand in eine andere Richtung zu zeigen. Darüber hinaus zeigen diese Materialien eine lineare Beziehung zwischen Spannung und Dehnung.

Viele Produkte, insbesondere Konsumprodukte, Schuhwerk, Kleidungsstücke, therapeutische/orthopädische Vorrichtungen oder sonstige Produkte, enthalten Materialien mit einem definierten Grad an Steifigkeit, die gleichzeitig aber eine gewisse Flexibilität beim Biegen während der Verwendung solcher Produkte ermöglicht. Oftmals können jedoch gewünschte Eigenschaften innerhalb eines Schuhs oder anderer ähnlicher Produkte richtungsabhängig unterschiedlich sein. Zum Beispiel enthält Schuhwerk häufig Materialien, die es der Sohlenanordnung ermöglichen, sich während der Verwendung mit dem Fuß des Trägers zu biegen, während gleichzeitig ein gewünschtes Maß an Schutz und struktureller Stabilität für den Fuß selbst bereitgestellt wird. Sohlenanordnungskonstruktionen mit verbesserter Flexibilität zeigen aber oft Nachteile in der strukturellen Steifigkeit und/oder Stabilität, oder aber die Verwendung von Materialien zur Verbesserung von struktureller Steifigkeit und Stabilität geht zu Lasten der Flexibilität.

Bei Materialien mit linearer Beziehung zwischen Belastung und Dehnung ist die Steifigkeit konstant. In vielen Anwendungen sind jedoch Materialien wünschenswert, die Steifigkeit als eine Funktion der Dehnungsrichtung bereitstellen. Es ist in einigen Produkten, insbesondere im Falle von Schuhwerk, wünschenswert, dem Schuhwerk zu ermöglichen, sich im Zehenbereich zu biegen, damit sich die Zehen des Trägers eines solchen Schuhwerks im Rahmen eines normalen Bewegungsbereichs biegen lassen. Es ist jedoch auch wünschenswert, dass das Schuhwerk eine Steifigkeit aufweist die verhindert bzw. erschwert, dass der Zehenbereich entgegengesetzt des normalen Bewegungsbereichs große Biegungen erfährt, die zu einem Zustand erhöhter Belastung im Fuß bis hin zu einer Überdehnung der Zehen des Trägers führen können. In ähnlicher Weise ist es wünschenswert, eine Strebe oder sogar ein orthopädisches oder therapeutisches Hilfsmittel bereitzustellen, das eine Biegung oder Ablenkung eines Körperabschnitts eines menschlichen Trägers durch einen normalen oder ausgewählten Bewegungsbereich ermöglicht. Andererseits ist jedoch auch wünschenswert, Produkte mit einer Steifigkeit bereitzustellen, die eine Biegung oder Ablenkung eines menschlichen Körperabschnitts in entgegengesetzter Richtung des normalen oder ausgewählten Bewegungsbereichs hinaus verhindert oder erschwert, um einen Zustand erhöhter Belastung zu vermeiden.

Existierende Produkte, die Steifigkeit als Funktion der Dehnungsrichtung aufweisen, sind beispielsweise Bimetalle, d.h. zweischichtige Metallaufbauten, wobei die Werkstoffe unterschiedliche Steifigkeiten aufweisen.

Aus WO2017/095479A1 ist allerdings eine anisotrope Kunststoff basierte Verbundwerkstoffanordnung bekannt, umfassend eine erste Schicht mit einem Zugmodul, das sich von seinem Druckmodul unterscheidet, und das ein variables Modulverhalten zeigt. Die erste Schicht knickt unter Kompression elastisch ein. Eine zweite Schicht weist einen Zugmodul auf, der im Wesentlichen gleich ihrem Kompressionsmodul ist. Die erste und die zweite Schicht sind miteinander verbunden und das Erzeugnis aus WO2017/095479A1 ist in eine erste Richtung biegbar, wobei eine Außenfläche der ersten Schicht unter Druck steht und das Erzeugnis eine erste Biegesteifigkeit beim Biegen in die erste Richtung aufweist. Das Erzeugnis gemäß WO2017/095479A1 ist in eine zweite Richtung entgegen der ersten Richtung biegbar, wobei die Außenfläche der ersten Schicht unter Spannung steht. Das Erzeugnis gemäß WO2017/095479A1 weist deshalb eine zweite Biegesteifigkeit auf, die größer als die erste Biegesteifigkeit beim Biegen in die zweite Richtung ist.

Ein erheblicher Nachteil der Erzeugnisse gemäß WO2017/095479A1 ist jedoch das unterschiedliche Wärmeausdehnungsverhalten der einzelnen Komponenten. So wird in WO2017/095479A1 beschrieben, dass die Wärmedehnungen, die bei der Abkühlung während der Herstellung der Erzeugnisse entstehen, beispielsweise durch gezielte Vorbiegungen kompensiert werden müssen. Dadurch sind die nach WO2017/095479A1 erhältlichen Erzeugnisse auf den Einsatz in bauteilspezifischen Anwendungen limitiert. Das gleiche Erzeugnis kann nicht für zwei unterschiedliche Bauteilgeometrien eingesetzt werden. Die anisotrope Verbundwerkstoffanordnung gemäß WO2017/095479A1 weist nach dem Herstellprozess einen Verzug auf.

Ein lineares Steifigkeitsverhalten und Kompromisse zwischen konkurrierenden Leistungs- und Betriebseigenschaften treten häufig beim Herstellen und/oder bei der Verwendung einer großen Vielzahl von Produkten auf. Dementsprechend besteht ein Bedarf an Faserverbundwerkstoffen bzw. Verbundwerkstoffanordnungen die für Anwendungen geeignet sind, die Material mit variablem Modul erfordern, d. h. anisotropes Biegematerial oder Dehnungsversteifungsmaterial, und gleichzeitig für viele Produkte eingesetzt werden können, ohne die Freiheitsgrade des gewünschten Designs einzuschränken.

Ausgehend vom Stand der Technik bestand deshalb die Aufgabe der vorliegenden Erfindung darin, einen Faserverbundwerkstoff bzw. eine Verbundwerkstoffanordnung in Form einer ebenen, verzugsfreien und allgemein einsetzbaren Halbzeugplatte mit dehnungsrichtungsabhängiger Steifigkeit bereit zu stellen, die einen vielfältigen Einsatz ermöglicht und potentiellen Herstellern eine bisher unerreichte Designfreiheit ermöglicht.

Die Lösung der Aufgabe und somit Gegenstand der vorliegenden Erfindung ist eine Verbundwerkstoffanordnung (1), umfassend
a. wenigstens eine erste Verstärkungsfaserlage (7),
b. wenigstens eine zweite Verstärkungsfaserlage (8),
c. eine Matrix aus einem thermoplastischen Polymer, in der die wenigstens eine erste Verstärkungsfaserlage (7) und die wenigstens eine zweite Verstärkungsfaserlage (8) eingebettet sind,
wobei senkrecht zur Dickenrichtung der Verbundwerkstoffanordnung (1) keine Symmetrieebene vorhanden ist, an der sich der Lagenaufbau aus wenigstens einer ersten Verstärkungsfaserlage (7) und wenigstens einer zweiten Verstärkungsfaserlage (8) spiegeln lässt, die Verstärkungsfasern aus unterschiedlichen Werkstoffen bestehen oder in unterschiedlicher textiler Form vorliegen und mit der Maßgabe, dass Spiegeln eine Kongruenzabbildung der geometrischen Form anhand der Symmetrieebene bedeutet.

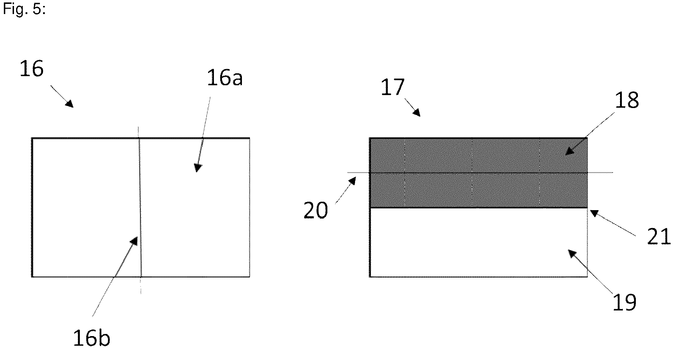

Unter "Spiegeln" ist im Sinne der vorliegenden Erfindung eine **mathematische Spiegelung** zu verstehen, also eine Kongruenzabbildung der geometrischen Form anhand der Symmetrieebene. Gemäß der Lehre in **https://de.wikipedia.org/wiki/Symmetrie_(Geometrie)#Symmetrieebene** besitzt ein Körper eine Spiegelsymmetrie, wenn es eine Ebene gibt und die Spiegelung an dieser Ebene eine Symmetrieoperation des betrachteten Körpers ist. Im Gegensatz zu einer physikalischen, optischen Spiegelung ist mit Spiegeln im Sinne der vorliegenden Erfindung aber nicht die Reflektion von Lichtstrahlen gemeint, sondern eine Kongruenzabbildung der geometrischen Form anhand der Symmetrieebene. Ein Körper gilt normalerweise als spiegelsymmetrisch, wenn seine Kongruenzabbildung deckungsgleich mit sich selbst ist. In **Fig. 5** ist ein Beispiel für Spiegelsymmetrie (16) mit einem Körper (16a) und einer Symmetrieebene (16b) einem Beispiel gegenübergestellt, das einen erfindungsgemäßen, nicht spiegelsymmetrischen Körper (17) zeigt. Erfindungsgemäß können die Komponenten (18) und (19) Verstärkungsfaserlagen sein, die in der gleichen Ebene wie die in die zweidimensionale Darstellung projizierte Ebene (20) liegen, denn dann gibt es keine Position, in der eine Parallelverschiebung der Ebene (20) dazu führt, dass an der Ebene (20) eine Spiegelsymmetrie möglich ist. Im Gegensatz dazu ist bei üblichen, aus dem Stand der Technik bekannten Verbundwerkstoffanordnungen, Spiegelsymmetrie an der Mittelebene (21) gegeben. Siehe auch: **https://de.wikipedia.org/wiki/Kongruenzabbildung**

Überraschenderweise wurde im Rahmen der vorliegenden Erfindung gefunden, dass wenn die wenigstens eine Verstärkungsfaserlage (7) und die wenigstens eine Verstärkungsfaserlage (8) aus unterschiedlichen Werkstoffen bestehen oder in unterschiedlicher Form vorliegen und wenn keine Symmetrieebene senkrecht zur Dickenrichtung der Verbundwerkstoffanordnung (1) vorhanden ist, sich die Steifigkeit als eine Funktion der Dehnungsrichtung erhöht. Vielmehr zeigt ein plattenförmiger Faserverbundwerkstoff bzw. eine Halbzeugplatte basierend auf einer erfindungsgemäßen Verbundwerkstoffanordnung (1) überraschenderweise belastungsabhängige Unterschiede in den mechanischen Eigenschaften, ohne dabei die Ebenheit des plattenförmigen Faserverbundwerkstoffs bzw. der Halbzeugplatte durch innere Spannungen zu beeinflussen.

Senkrecht zur Dickenrichtung der Verbundwerkstoffanordnung bedeutet im Sinne der vorliegenden Erfindung ein Winkel von 90º +/- 5º.

Erfindungsgemäß werden in den Verstärkungsfaserlagen (7) und (8) Verstärkungsfasern aus unterschiedlichen Werkstoffen oder in unterschiedlicher textiler Form eingesetzt. Vorzugsweise wird die textile Form der Verstärkungsfaserlagen (7) und (8) aus der Gruppe der Gewebe, Gelege und Fasermatten gewählt.

Vorzugsweise liegt die Verbundwerkstoffanordnung (1) mit wenigstens der ersten Verstärkungsfaserlage (7) und der wenigstens zweiten Verstärkungsfaserlage (8) im ebenen Zustand (9), d.h. in Form einer Halbzeugplatte vor. Dieser Zustand wird vorzugsweise erzielt, wenn bei der Herstellung der Verbundwerkstoffanordnung (1) wenigstens eine Presse eingesetzt wird. Vorzugsweise wird deshalb zum Einkapseln der Verstärkungsfaserlagen (7) und (8) in die Matrix aus thermoplastischem Polymer eine Presse eingesetzt, besonders bevorzugt eine Doppelbandpresse, eine Intervallheizpresse oder eine statische Presse. Das Einkapseln der Verstärkungsfaserlagen (7) und (8) in die Matrix aus thermoplastischem Polymer erfolgt in diesem Fall vorzugsweise bei hohem Druck und hoher Temperatur.

Erfindungsgemäß bedeutet ein hoher Druck >10 bar. Erfindungsgemäß sind hohe Temperaturen wenigstens 5°C oberhalb der Kristallitschmelztemperatur des zu verarbeitenden und als Matrix einzusetzenden thermoplastischen Polymers bzw. wenigstens 5°C oberhalb der Kristallitschmelztemperatur des einzusetzenden teilkristallinen thermoplastischen Kunststoffes oder wenigstens 5°C oberhalb der Glasübergangstemperatur des zu verarbeitenden amorphen thermoplastischen Kunststoffes. Die Kristallitschmelztemperatur Tₘ ist die Temperatur, bei der bei teilkristallinen Thermoplasten die Kristallite aufschmelzen. Die Glasübergangstemperatur T_{g} ist die Erweichungstemperatur für die amorphen Kunststoffe und amorphen Bereiche von Kunststoffen. Kristalline Polymere (speziell solche, die mit Füllstoffen verstärkt sind) können auch oberhalb ihrer Glastemperatur noch eingesetzt werden. Dies liegt daran, dass teilkristalline Polymere zusätzlich zu der Glastemperatur noch eine Kristallitschmelztemperatur aufweisen, welche meist deutlich höher liegt; siehe:
**https://www.krv.de/artikel/glasuebergangstemperatur**
**https://de.wikipedia.org/wiki/Hochleistungskunststoffe**

Die Werkstoffe für die erfindungsgemäß in der wenigstens einen ersten Verstärkungsfaserlage (7) und in der wenigstens einen zweiten Verstärkungsfaserlage (8) unterscheiden sich insbesondere in ihrer chemischen Zusammensetzung, in ihren physikalischen Eigenschaften wie Steifigkeit und Festigkeit (E-Modul und Bruchspannung gemäß ISO527-4/5), in ihren geometrischen Eigenschaften wie Faserdurchmesser oder Garnstärke gemäß DIN EN 12654-2/3, in ihrer Textilform, insbesondere Gewebebindungsart gemäß DIN ISO 9354 oder Garndichte gemäß DIN EN 1049-2, oder in einer Kombination dieser physikalischen Eigenschaften.

Die wenigstens eine erste Verstärkungsfaserlage (7) und die wenigstens eine zweite Verstärkungsfaserlage (8) liegen innerhalb eines erfindungsgemäßen Faserverbundwerkstoffs als vollständig imprägniertes Laminat in einer durchgehenden Schicht aus thermoplastischem Polymer, auch als Matrix bezeichnet, vor. Eine solche erfindungsgemäße Anordnung der Verstärkungsfaserlagen (7) und (8) in einer erfindungsgemäßen Verbundwerkstoffanordnung (1) ist in einer ersten Richtung biegbar, wobei eine äußere Oberfläche der wenigstens einen ersten Verstärkungsfaserlage (7) unter Kompressionsspannung steht und die Anordnung eine erste gemäß DIN 53121 zu bestimmende Biegesteifigkeit während des Biegens in der ersten Richtung aufweist. Die Anordnung der Verstärkungsfaserlagen (7) und (8) in einer erfindungsgemäßen Verbundwerkstoffanordnung (1) ist in einer der ersten Richtung entgegengesetzten zweiten Richtung biegbar, wobei die Außenfläche der wenigstens einen ersten Verstärkungsfaserlage (7) unter Zugspannung steht und während des Biegens in die zweite Richtung eine zweite gemäß DIN 53121 zu bestimmende Biegesteifigkeit aufweist, die grösser ist, als die erste Biegesteifigkeit.

Erfindungsgemäß wird eine anisotrope Verbundwerkstoffanordnung bereitgestellt. Im Gegensatz zum Stand der Technik weist eine erfindungsgemäße Verbundwerkstoffanordnung (1) bzw. eine darauf basierende Halbzeugplatte keinen Verzug auf.

Die Fasern der wenigstens einen ersten Verstärkungsfaserlage (7) und der wenigstens einen zweiten Verstärkungsfaserlage (8) sind vorzugsweise anorganische, organische oder synthetische Fasern.

Vorzugsweise werden im Rahmen der vorliegenden Erfindung die Fasern der wenigstens einen ersten Verstärkungsfaserlage (7) und die Fasern der wenigstens einen zweiten Verstärkungsfaserlage (8) ausgewählt aus der Gruppe der Kohlenstofffasern, der Glasfasern, der Keramikfasern, der Metallfasern, der Polymerfasern und der Naturfasern. Die Erfindung umfasst auch Kombinationen von Fasern. Die Fasern der wenigstens einen ersten Verstärkungsfaserlage (7) können sich von den Fasern der wenigstens einen zweiten Verstärkungsfaserlage (8) unterscheiden, sie können aber auch identisch sein. Bevorzugte Polymerfasern basieren auf Polyamiden, Polyestern oder Kombinationen davon. Insbesondere bevorzugt ist Nylon.

Erfindungsgemäß besonders bevorzugt sind folgende, in **Tab. 1** dargestellte Kombinationen von Fasern:

**Tab. 1**

| Verstärkungsfaserlage 1 | Verstärkungsfaserlage 2 |
|---|---|
| Carbon | Carbon |
| Glas | Glas |
| Aramid | Aramid |
| Carbon | Aramid |
| Glas | Aramid |

Vorzugsweise werden in der erfindungsgemäßen Verbundwerkstoffanordnung (1) die Verstärkungsfaserlagen (7) und (8) in einer Matrix auf Basis eines thermoplastischen Polymers, bevorzugt auf Basis eines thermoplastischen Polymers auszuwählen aus der Gruppe der thermoplastischen Polyurethane, der thermoplastischen Elastomere, der thermoplastischen Polyolefine, der Silikone, der Polyacrylate, der Polyamide, der Nitril- oder Butylkautschuke und der Styrolblockcopolymere, eingesetzt. Insbesondere bevorzugt sind Polyamide.

Vorzugsweise weist eine erfindungsgemäße Verbundwerkstoffanordnung (1) ein im Zugversuch nach DIN EN ISO 527 zu bestimmendes Elastizitätsmodul im Bereich von 0,03 bis 50 MPa auf. Das Elastizitätsmodul, auch E-Modul, Zugmodul, Elastizitätskoeffizient, Dehnungsmodul oder Youngscher Modul, ist ein Materialkennwert aus der Werkstofftechnik, das bei linear-elastischem Verhalten den proportionalen Zusammenhang zwischen Spannung und Dehnung bei der Verformung eines festen Körpers beschreibt. Man unterscheidet das im Biegeversuch nach DIN EN ISO 178 und im Zugversuch nach DIN EN ISO 527 zu bestimmende E-Modul. Das Elastizitätsmodul ist die Proportionalitätskonstante zwischen Spannung **σ** und Dehnung **ε** eines festen Werkstoffes im linear elastischen Bereich. Das E-Modul definiert also das Verhältnis des Spannungsanstiegs und der dabei zunehmenden Dehnung bei unbeeinflusster Querschnittsverformung eines Prüfkörpers. Das E-Modul wird üblicherweise bei der Festigkeitsberechnung von Metallen und Kunststoffen verwendet. Das E-Modul bezeichnet den Steifigkeitsfaktor eines Kunststoffes, als im idealelastischen Anfangsbereich seiner Spannungs-Dehnungskurve und wird in N/mm² oder MPa ausgedrückt. Je höher der Wert des E-Modul, desto steifer ist das Material. Einfach gesagt ist das E-Modul ein Kennwert dafür, wie stark ein Werkstoff bei Krafteinwirkung nachgibt, also dessen Widerstandskraft gegen Verformung.

Besonders bevorzugt weist eine Verbundwerkstoffanordnung (1) ein im Zugversuch nach DIN EN ISO 527 zu bestimmendes Elastizitätsmodul im Bereich von 0,03 bis 15 MPa auf. Ganz besonders bevorzugt weist eine Verbundwerkstoffanordnung (1) ein im Zugversuch nach DIN EN ISO 527 zu bestimmendes Elastizitätsmodul im Bereich von 0,1 bis 3,4 MPa auf.

Vorzugsweise sind in der erfindungsgemäßen Verbundwerkstoffanordnung (1) die Verstärkungsfaserlagen (7) und (8) vollständig in der Matrix eingekapselt. Eine erfindungsgemäße Verbundwerkstoffanordnung (1) weist deshalb besonders bevorzugt weniger als 3 Gew.-% Lufteinschlüsse auf.

Zur Klarstellung sei angemerkt, dass vom Rahmen der vorliegenden Erfindung hinsichtlich der erfindungsgemäßen Verbundwerkstoffanordnungen und deren erfindungsgemäße Verwendungen alle aufgeführten allgemeinen oder in Vorzugsbereichen genannten Definitionen und Parameter in beliebigen Kombinationen umfasst sind. Dies betrifft insbesondere auch einzusetzende Mengenangaben von Komponenten. Die im Rahmen dieser Anmeldung genannten Normen beziehen sich auf die zum Anmeldetag dieser Erfindung geltende Fassung. Sofern nicht anders angegeben handelt es sich bei Prozentangaben um Gewichtsprozente.

### Schichten von Verstärkungsfaserlagen

In einer bevorzugten oder alternativen Ausführungsform liegen in einer erfindungsgemäßen Verbundwerkstoffanordnung (1) die wenigstens eine erste Verstärkungsfaserlage (7) und die wenigstens eine zweite Verstärkungsfaserlage (8) jeweils in Form einer Schicht vor und die wenigstens eine zweite Schicht mit wenigstens einer zweiten Verstärkungsfaserlage (8) unterscheidet sich im mechanischen Spannungs-Dehnungsverhalten von der wenigstens einen ersten Schicht mit wenigstens einer ersten Verstärkungsfaserlage (7).

Eine Schicht im Sinne der vorliegenden Erfindung bedeutet eine vollständig mit Polymer imprägnierte Verstärkungsfaserlage, wobei die Grenze der Schicht sich dadurch auszeichnet, dass dort keine Verstärkungsfasern sondern ausschließlich Polymer vorliegt. Da das Polymer durchgehend in der gesamten Ausführungsform identisch ist, existiert daher keine physikalische Schichtgrenze, eine Schicht ist dagegen rein geometrisch definiert. Die Grenzfläche zweier Schichten ist die Mitte des faserfreien Polymerbereichs zwischen den Verstärkungsfasern.

Die Erfindung betrifft in einem solchen Fall eine Verbundwerkstoffanordnung (1), umfassend
a. wenigstens eine **erste Schicht** mit wenigstens einer Verstärkungsfaserlage (7),
b. wenigstens eine **zweite Schicht** mit wenigstens einer Verstärkungsfaserlage (8),
c. eine Matrix aus einem thermoplastischen Polymer, in der die Verstärkungsfasern der wenigstens einen ersten Schicht mit wenigstens einer Verstärkungsfaserlage (7) und der wenigstens einen zweiten Schicht mit wenigstens einer Verstärkungsfaserlage (8) eingebettet sind,
indem senkrecht zur Dickenrichtung der Verbundwerkstoffanordnung (1) keine Symmetrieebene vorhanden ist, an der sich der Lagenaufbau aus wenigstens der einen ersten Schicht Verstärkungsfaserlage (7) und der wenigstens einen zweiten Schicht Verstärkungsfaserlage (8) spiegeln lässt, wobei die Verstärkungsfasern aus unterschiedlichen Werkstoffen bestehen oder in unterschiedlicher textiler Form vorliegen **und die wenigstens eine zweite Schicht mit wenigstens einer Verstärkungsfaserlage (8) sich im mechanischen Spannungs-Dehnungsverhalten von der wenigstens einen ersten Schicht mit wenigstens einer Verstärkungsfaserlage (7) unterscheidet** mit der Maßgabe, dass Spiegeln eine Kongruenzabbildung der geometrischen Form anhand der Symmetrieebene bedeutet.

Eine solche alternative oder bevorzugte Verbundwerkstoffanordnung (1) umfassend wenigstens eine erste Schicht mit wenigstens einer Verstärkungsfaserlage (7) und wenigstens eine zweite Schicht mit wenigstens einer Verstärkungsfaserlage (8) ist in einer ersten Richtung biegbar, wobei eine äußere Oberfläche der ersten Schicht in Kompression ist und die Verbundwerkstoffanordnung bei einer Biegung in der ersten Richtung eine erste gemäß DIN 14125 zu bestimmende Biegesteifigkeit aufweist. Eine solche Verbundwerkstoffanordnung ist in einer der ersten Richtung entgegengesetzten zweiten Richtung biegbar, wobei die Außenfläche der ersten Schicht unter Spannung steht und wobei die Verbundwerkstoffanordnung eine zweite gemäß DIN 14125 zu bestimmende Biegesteifigkeit aufweist, die grösser ist als die erste Biegesteifigkeit beim Biegen in der ersten Richtung.

Vorzugsweise liegt auch eine solche alternative oder bevorzugte Verbundwerkstoffanordnung (1) umfassend wenigstens eine erste Schicht mit wenigstens einer Verstärkungsfaserlage (7) und wenigstens eine zweite Schicht mit wenigstens einer Verstärkungsfaserlage (8) im ebenen Zustand (9) vor. Dieser Zustand liegt im Rahmen der vorliegenden Erfindung vor, wenn bei der Herstellung der Verbundwerkstoffanordnung wenigstens eine Presse eingesetzt wird, vorzugsweise eine Presse auszuwählen aus der Gruppe Doppelbandpresse, Intervallheizpresse und statische Presse.

Erfindungsgemäß werden auch in dieser alternativen oder bevorzugten Verbundwerkstoffanordnung (1) mit Schichten von Verstärkungsfaserlagen Verstärkungsfasern aus unterschiedlichen Werkstoffen oder in unterschiedlicher textiler Form eingesetzt. Vorzugsweise wird die textile Form der Verstärkungsfaserlagen (7) und (8) aus der Gruppe der Gewebe, Gelege und Fasermatten gewählt.

Die Fasern in der wenigstens einen ersten Schicht können sich von den Fasern der wenigstens einen zweiten Schicht unterscheiden, sie können aber auch identisch sein. Bevorzugte Polymerfasern basieren auf Polyamiden, Polyestern oder Kombinationen davon. Insbesondere bevorzugt ist Nylon.

Vorzugsweise werden auch in dieser alternativen oder bevorzugten Verbundwerkstoffanordnung (1) mit Schichten von Verstärkungsfaserlagen die Verstärkungsfaserlagen (7) und (8) in einer Matrix auszuwählen auf Basis eines thermoplastischen Polymers, bevorzugt in einer Matrix auf Basis eines thermoplastischen Polymers auszuwählen aus der Gruppe der thermoplastischen Polyurethane, der thermoplastischen Elastomere, der thermoplastischen Polyolefine, der Silikone, der Polyacrylate, der Polyamide, der Nitril- oder Butylkautschuke und der Styrolblockcopolymere, eingesetzt.

Vorzugsweise sind auch in dieser alternativen oder bevorzugten Verbundwerkstoffanordnung (1) mit Schichten von Verstärkungsfaserlagen die Verstärkungsfaserlagen (7) und (8) vollständig in der Matrix eingekapselt. Besonders bevorzugt weist auch eine solche alternative oder bevorzugte Verbundwerkstoffanordnung (1) mit Schichten von Verstärkungsfaserlagen weniger als 3 Gew.-% Lufteinschlüsse auf.

### Der Begriff "eben"

Die Ebenheit einer erfindungsgemäßen Verbundwerkstoffanordnung (1) umfassend wenigstens eine erste Verstärkungsfaserlage (7) und wenigstens eine zweite Verstärkungsfaserlage (8), oder einer Verbundwerkstoffanordnung (1) umfassend wenigstens eine erste Schicht mit wenigstens einer Verstärkungsfaserlage (7) und wenigstens eine zweite Schicht mit wenigstens einer Verstärkungsfaserlage (8) wird über die Höhe des Freiraums zwischen Verbundwerkstoffanordnung und Auflagefläche, sowie über die Dicke der Verbundwerkstoffanordnung bestimmt.

Ein plattenförmiger Verbundwerkstoff im Sinne der vorliegenden Erfindung gilt als eben, wenn dieser nach der Herstellung mit einer Presse, insbesondere mittels Doppelband-, Intervallheiz- oder statischer Presse, in einem Zustand vorliegt, bei dem die Höhe des Freiraums zwischen Verbundwerkstoffanordnung und Auflagefläche bei einer Plattengröße von 300mm x 300mm maximal 5 mm beträgt, gemessen mit einem Messkeil, der parallel zum Plattenrand bündig unter die Platte geschoben wird.

Ein plattenförmiger Verbundwerkstoff im Sinne der vorliegenden Erfindung gilt deshalb als eben, wenn die Dicke der 300mm x 300mm Platte an keiner Stelle mehr als 10% vom Mittelwert der Plattendicke abweicht, wobei die Plattendicke an mindestens 4 Stellen, die mehr als 100mm voneinander entfernt liegen, mit einer Dickenmessschraube mit flachem Messkopf gemessen wird. Bei kleineren Plattenmaßen gilt ein plattenförmiger Verbundwerkstoff im Sinne der vorliegenden Erfindung als eben, wenn die genannten Grenzen mit dem Verhältnis des kleineren Plattenmaßes zu dem Plattenmaß 300mm x 300mm skaliert und mit der gleichen Messmethodik gemessen werden.

### Abstimmbare anisotrope Eigenschaften

Eine weitere alternative oder bevorzugte Ausführungsform der vorliegenden Erfindung stellt eine faserverstärkte Verbundwerkstoffanordnung mit abstimmbaren anisotropen Eigenschaften bereit. Die Verbundwerkstoffanordnung einer solchen Ausführungsform ist so konfiguriert, dass sie einen geringen Widerstand gegen Biegung in eine Richtung und einen hohen Widerstand gegen Biegung in eine andere Richtung aufweist.

Diese weitere alternative oder bevorzugte Ausführungsform mit abstimmbaren anisotropen Eigenschaften weist wenigstens eine erste Verstärkungsfaserlage (7) in Form von Geweben, Gelegen oder Fasermatten auf. Die wenigstens eine erste Verstärkungsfaserlage (7) umfasst einen ersten Faserwerkstoff mit einem ersten, im Zugversuch nach DIN EN ISO 527 zu bestimmenden Elastizitätsmodul (d.h. erster Zugmodul), vorzugsweise im Bereich 10 bis 1000 GPa.

Eine elastisch verformbare Matrix kapselt die Verstärkungsfasern ein wobei die Matrix einen im Zugversuch nach DIN EN ISO 527 zu bestimmenden Elastizitätsmodul im Bereich von 0,03 bis 100 MPa, bevorzugt im Bereich 0,2 bis 10 GPa aufweist (d. h. erster Zugmodul).

Eine zweite Verstärkungsfaserlage in Form von Geweben, Gelegen oder Fasermatten ist in derselben elastisch verformbaren Matrix eingekapselt und auf diese Weise mit der ersten Verstärkungsfaserlage gekoppelt. Diese Kopplung weist eine hohe interlaminare Scherfestigkeit auf, vorzugsweise eine Scherfestigkeit im Bereich 20 bis 100 MPa gemäß DIN EN ISO 2563.

Die wenigstens eine zweite Verstärkungsfaserlage umfasst einen zweiten Faserwerkstoff mit einem zweiten, im Zugversuch nach DIN EN ISO 527 zu bestimmenden Elastizitätsmodul (d. h. zweiter Zugmodul), vorzugsweise im Bereich von 10 bis 1000 GPa. Dieser zweite Elastizitätsmodul oder Zugmodul ist grösser oder gleich dem Elastizitätsmodul oder Zugmodul der ersten Verstärkungsfaserlage, wobei die erste Verstärkungsfaserlage und die zweite Verstärkungsfaserlage über einen **gleichen oder ähnlichen Wärmeausdehnungskoeffizienten gemäß ISO 11359** verfügen. Dies führt dazu, dass bei der Abkühlung der elastisch verformbaren Matrix während der Herstellung der Verbundwerkstoffanordnung in den Verstärkungsfaserlagen keine inneren Spannungen und somit auch keine Verformungen induziert werden. Die Matrix gilt als elastisch verformbar, wenn sich ihr Verformungsverhalten bei kleinen Dehnungen mit dem Hookeschen Gesetz beschreiben lässt, siehe:

### https://de.wikipedia.org/wiki/Elastizit%C3%A4t (Physik)

In einer besonderen Ausführungsform ist der Wärmeausdehnungskoeffizient der beiden Verstärkungsfaserlagen negativ. Ein gleicher oder ähnlicher Wärmeausdehnungskoeffizient bedeutet im Sinne der vorliegenden Erfindung einen Unterschied von maximal ± 1·10⁻⁵ 1/K.

Die Erfindung betrifft in diesem Fall eine Verbundwerkstoffanordnung (1), umfassend
a. wenigstens eine erste Verstärkungsfaserlage (7) in Form von Geweben, Gelegen oder Fasermatten **mit einem ersten gemäß ISO 527-1 zu bestimmenden Zugmodul,**
b. wenigstens eine zweite Verstärkungsfaserlage (8) in Form von Geweben, Gelegen oder Fasermatten **mit einem zweiten gemäß ISO 527-1 zu bestimmenden Zugmodul,**
c. eine elastisch verformbare Matrix aus einem thermoplastischen Polymer, in der die Verstärkungsfasern der wenigstens einen ersten Verstärkungsfaserlage (7) und der wenigstens einen zweiten Verstärkungsfaserlage (8) eingebettet sind, wobei senkrecht zur Dickenrichtung der Verbundwerkstoffanordnung (1) keine Symmetrieebene vorhanden ist, an der sich der Lagenaufbau aus der wenigstens einen ersten Verstärkungsfaserlage (7) und der wenigstens einen zweiten Verstärkungsfaserlage (8) spiegeln lässt und die Verstärkungsfasern aus unterschiedlichen Werkstoffen bestehen oder in unterschiedlicher textiler Form vorliegen und der zweite Zugmodul grösser oder gleich dem ersten Zugmodul ist und die wenigstens eine erste Verstärkungsfaserlage (7) und die wenigstens eine zweite Verstärkungsfaserlage (8) **über einen gleichen oder ähnlichen Wärmeausdehnungskoeffizienten** verfügen mit der Maßgabe, dass Spiegeln eine Kongruenzabbildung der geometrischen Form anhand der Symmetrieebene bedeutet.

Vorzugsweise liegt auch eine solche Verbundwerkstoffanordnung (1) mit abstimmbaren anisotropen Eigenschaften mit wenigstens einer ersten Verstärkungsfaserlage (7) in Form von Geweben, Gelegen oder Fasermatten **mit einem ersten gemäß ISO 527-1 zu bestimmenden Zugmodul** und wenigstens einer zweiten Verstärkungsfaserlage (8) in Form von Geweben, Gelegen oder Fasermatten **mit einem zweiten gemäß ISO 527-1 zu bestimmenden Zugmodul** im **ebenen Zustand (9)** vor, wobei die obige Definition von **eben** gilt. Dieser Zustand liegt im Rahmen der vorliegenden Erfindung vor, wenn bei der Herstellung der Verbundwerkstoffanordnung wenigstens eine Presse eingesetzt wird, vorzugsweise eine Presse aus der Gruppe Doppelbandpresse, Intervallheizpresse und statische Presse.

Erfindungsgemäß umfasst sind aber auch Ausführungsformen von Verbundwerkstoffanordnungen (1) in denen wenigstens eine erste **Schicht** mit wenigstens einer ersten Verstärkungsfaserlage (7) in Form von Geweben, Gelegen oder Fasermatten **mit einem ersten gemäß ISO 527-1 zu bestimmenden Zugmodul** und wenigstens eine zweite **Schicht mit** wenigstens einer zweiten Verstärkungsfaserlage (8) in Form von Geweben, Gelegen oder Fasermatten **mit einem zweiten gemäß ISO 527-1 zu bestimmenden Zugmodul** vorliegen, wobei die wenigstens eine erste Verstärkungsfaserlage (7) und die wenigstens eine zweite Verstärkungsfaserlage (8) über einen gleichen oder ähnlichen Wärmeausdehnungskoeffizienten verfügen.

Gemäß **https://de.wikipedia.org/wiki/Ausdehnungskoeffizient** ist der Wärmeausdehnungskoeffizient ein Kennwert, der das Verhalten eines Stoffes bezüglich Veränderungen seiner Abmessungen bei Temperaturveränderungen beschreibt - deswegen oft auch thermischer Ausdehnungskoeffizient genannt. Der hierfür verantwortliche Effekt ist die Wärmeausdehnung. Die Wärmeausdehnung ist abhängig vom verwendeten Stoff, es handelt sich also um eine stoffspezifische Materialkonstante. Da die Wärmeausdehnung bei vielen Stoffen nicht gleichmäßig über alle Temperaturbereiche erfolgt, ist auch der Wärmeausdehnungskoeffizient selbst temperaturabhängig und wird deshalb für eine bestimmte Bezugstemperatur oder für einen bestimmten Temperaturbereich angegeben.

Es wird zwischen dem thermischen Längenausdehnungskoeffizienten a, auch linearer Wärmeausdehnungskoeffizient genannt, dem thermischen Flächenausdehnungskoeffizienten β, auch flächiger oder quadratischer Ausdehnungskoeffizient genannt, und dem thermischen Raumausdehnungskoeffizienten y, auch räumlicher oder Volumen- oder kubischer Ausdehnungskoeffizient genannt, unterschieden. Da im Allgemeinen die Ausdehnungskoeffizienten kleine Zahlenwerte darstellen, gilt: β = 2 α und γ = 3 α. Geprüft wird im Rahmen der vorliegenden Erfindung der Längenausdehnungskoeffizient gemäß ISO 11359 der angibt, um wie viel sich die Länge eines Kunststoffteils vergrößert, wenn die Temperatur um 1 K erhöht wird.

Erfindungsgemäß werden auch in einer solchen Verbundwerkstoffanordnung (1), worin die wenigstens eine erste Verstärkungsfaserlage (7) und die wenigstens eine zweite Verstärkungsfaserlage (8) über einen gleichen oder ähnlichen Wärmeausdehnungskoeffizienten verfügen, aus unterschiedlichen Werkstoffen oder in unterschiedlicher textiler Form eingesetzt, wobei die textile Form der wenigstens einen Verstärkungsfaserlage (7) und der wenigstens einen Verstärkungsfaserlage (8) stets aus der Gruppe der Gewebe, Gelege und Fasermatten gewählt wird.

Vorzugsweise werden auch in einer solchen Verbundwerkstoffanordnung (1), worin die wenigstens eine erste Verstärkungsfaserlage (7) und die wenigstens eine zweite Verstärkungsfaserlage (8) über einen gleichen oder ähnlichen Wärmeausdehnungskoeffizienten verfügen, die Verstärkungsfaserlagen (7) und (8) in einer Matrix auszuwählen auf Basis eines thermoplastischen Polymers, bevorzugt in einer Matrix auf Basis eines thermoplastischen Polymers auszuwählen aus der Gruppe der thermoplastischen Polyurethane, der thermoplastischen Elastomere, der thermoplastischen Polyolefine, der Silikone, der Polyacrylate, der Polyamide, der Nitril- oder Butylkautschuke und der Styrolblockcopolymere, eingesetzt.

Vorzugsweise sind auch in einer solchen Verbundwerkstoffanordnung (1), ) worin die wenigstens eine erste Verstärkungsfaserlage (7) und die wenigstens eine zweite Verstärkungsfaserlage (8) über einen gleichen oder ähnlichen Wärmeausdehnungskoeffizienten verfügen, die Verstärkungsfaserlagen (7) und (8) vollständig in der Matrix eingekapselt.

Besonders bevorzugt weist eine solche Verbundwerkstoffanordnung (1), ) worin die wenigstens eine erste Verstärkungsfaserlage (7) und die wenigstens eine zweite Verstärkungsfaserlage (8) über einen gleichen oder ähnlichen Wärmeausdehnungskoeffizienten verfügen, weniger als 3 Gew.-% Lufteinschlüsse auf.

### Unterschiedlich orientierte Faserhauptrichtungen

Eine weitere alternative oder bevorzugte Ausführungsform stellt ebenfalls eine anisotrope Verbundwerkstoffanordnung bereit. Diese Anordnung weist wenigstens eine erste Verstärkungsfaserlage in Form von Geweben, Gelegen oder Fasermatten auf. Eine elastisch verformbare Matrix kapselt die Verstärkungsfasern ein. Die wenigstens eine erste Verstärkungsfaserlage weist einen ersten im Zugversuch nach DIN EN ISO 527 zu bestimmenden Elastizitätsmodul auf (d. h., erster Zugmodul), vorzugsweise im Bereich 10 - 1000 GPa. Wenigstens eine zweite Verstärkungsfaserlage in Form von Geweben, Gelegen oder Fasermatten ist in derselben elastisch verformbaren Matrix eingekapselt und damit fest mit der ersten Verstärkungsfaserlage gekoppelt. Diese Kopplung weist dabei eine gemäß DIN EN 2563 zu bestimmende hohe interlaminare Scherfestigkeit im Bereich von 20 bis 100 MPa auf. Die wenigstens eine zweite Verstärkungsfaserlage umfasst ein Material mit einem zweiten, im Zugversuch nach DIN EN ISO 527 zu bestimmenden Elastizitätsmodul in Spannung (d. h. einem zweiten Zugmodul), der grösser oder gleich der ersten Verstärkungsfaserlage ist, wobei die wenigstens eine erste Verstärkungsfaserlage (7) und die wenigstens eine zweite Verstärkungsfaserlage (8) **unterschiedlich orientierte Faserhauptrichtungen** aufweisen, die dazu führen, dass die inneren Spannungen, die bei der Abkühlung der elastisch verformbaren Matrix während der Herstellung der Verbundwerkstoffanordnung, vorzugsweise in einer Presse, insbesondere mittels Doppelband-, Intervallheiz- oder statischer Presse, über die unterschiedlich orientierten Fasern derart in der Verbundwerkstoffanordnung verteilt werden, dass Verformungen der unterschiedlichen Verstärkungsfaserlagen gegenseitig ausgeglichen werden.

Das Merkmal **interlaminare Scherfestigkeit** (ILSS) beschreibt eine Schubfestigkeit zwischen Laminatebenen. Bei Laminaten mit spröder Matrix, z.B. aus Epoxydharz, wird die interlaminare Scherfestigkeit üblicherweise im Kurzbiegeversuch (SBS) ermittelt. In der Materialentwicklung werden üblicherweise Standard-Laminate von 2 mm Dicke geprüft. Je nach anzuwendender Norm beträgt der Auflageabstand dann 8 oder 10 mm und muss mit einer Genauigkeit von bis zu ± 0.1 mm eingestellt werden. Messungen der ILSS erfolgen im Rahmen der vorliegenden Erfindung gemäß DIN EN 2563; siehe Broschüre der **ZwickRoell, Prüfmaschinen und Prüfsysteme für Composites, Intelligent Testing, Seite 14.**

Das Elastizitätsmodul bzw. E-Modul ist ein Kennwert dafür, wie stark ein Material bei Krafteinwirkung nachgibt und ist die Proportionalitätskonstante zwischen Spannung σ und Dehnung ε eines festen Werkstoffes im linear elastischen Bereich. Das Elastizitätsmodul kann auch graphisch aus dem Spannungs-Dehnungs-Diagramm ermittelt werden. Das Spannungs-Dehnungs-Diagramm ist ein direktes Ergebnis eines gemäß ISO 527-1 durchzuführenden Zugversuchs, worin eine Normprobe auf Zug beansprucht wird. Die dabei auftretende Dehnung und Spannung wird anschließend in einem Diagramm aufgetragen. Im linear-elastischen Anfangsbereich der Kurve kann aus der Spannung und der Dehnung das E-Modul ermittelt werden. Gemäß **https://de.wikipedia.org/wiki/ISO_527-1** beschreibt die ISO 527-1 die Prüfbedingungen, die Geometrie der Prüfkörper, die Messwerterfassung, die Prüfgeschwindigkeit und die Auswertung.

Die Erfindung betrifft in diesem Fall eine Verbundwerkstoffanordnung (1) umfassend
a. wenigstens eine erste Verstärkungsfaserlage (7) in Form von Geweben, Gelegen oder Fasermatten mit einem ersten, gemäß ISO 527-1 zu bestimmenden Zugmodul,
b. wenigstens eine zweite Verstärkungsfaserlage (8) in Form von Geweben, Gelegen oder Fasermatten mit einem zweiten, gemäß ISO 527-1 zu bestimmenden Zugmodul, und
c. eine elastisch verformbare Matrix aus einem thermoplastischen Polymer, in der die Verstärkungsfasern der wenigstens einen ersten Verstärkungsfaserlage (7) und der wenigstens einen zweiten Verstärkungsfaserlage (8) eingebettet sind,
wobei senkrecht zur Dickenrichtung der Verbundwerkstoffanordnung (1) keine Symmetrieebene vorhanden ist, an der sich der Lagenaufbau aus wenigstens der einen ersten Verstärkungsfaserlage (7) und der wenigstens einen zweiten Verstärkungsfaserlage (8) spiegeln lässt und die Verstärkungsfasern aus unterschiedlichen Werkstoffen bestehen oder in unterschiedlicher textiler Form vorliegen und der zweite, im Zugversuch nach DIN EN ISO 527 zu bestimmende Zugmodul grösser oder gleich dem ersten, im Zugversuch nach DIN EN ISO 527 zu bestimmenden Zugmodul ist und die wenigstens eine erste Verstärkungsfaserlage (7) und die wenigstens eine zweite Verstärkungsfaserlage (8) **unterschiedlich orientierte Faserhauptrichtungen** aufweisen mit der Maßgabe, dass Spiegeln eine Kongruenzabbildung der geometrischen Form anhand der Symmetrieebene bedeutet.

Vorzugsweise liegt auch eine solche Verbundwerkstoffanordnung (1) mit wenigstens der einen ersten Verstärkungsfaserlage (7) und wenigstens der einen zweiten Verstärkungsfaserlage (8) im ebenen Zustand (9) vor, wobei die obige Definition von **eben** gilt. Dieser Zustand liegt im Rahmen der vorliegenden Erfindung vor, wenn bei der Herstellung dieser Verbundwerkstoffanordnung wenigstens eine Presse, vorzugsweise eine Presse auszuwählen aus der Gruppe Doppelbandpresse, Intervallheizpresse und statische Presse, eingesetzt wird.

Erfindungsgemäß umfasst sind aber auch Ausführungsformen von Verbundwerkstoffanordnungen (1) in denen wenigstens eine erste **Schicht** wenigstens einer ersten Verstärkungsfaserlage (7) in Form von Geweben, Gelegen oder Fasermatten mit einem ersten gemäß ISO 527-1 zu bestimmenden Zugmodul und wenigstens eine zweite **Schicht** wenigstens einer zweiten Verstärkungsfaserlage (8) in Form von Geweben, Gelegen oder Fasermatten mit einem zweiten gemäß ISO 527-1 zu bestimmenden Zugmodul vorliegen und die wenigstens eine erste Schicht mit Verstärkungsfaserlage(n) (7) und die wenigstens zweite Schicht mit Verstärkungsfaserlage(n) (8) **unterschiedlich orientierte Faserhauptrichtungen** aufweisen.

Erfindungsgemäß werden auch in einer solchen Verbundwerkstoffanordnung (1) mit unterschiedlich orientierten Faserhauptrichtungen Verstärkungsfasern aus unterschiedlichen Werkstoffen oder in unterschiedlicher textiler Form eingesetzt. Vorzugsweise wird die textile Form der Verstärkungsfaserlagen (7) und (8) aus der Gruppe der Gewebe, Gelege und Fasermatten gewählt.

Vorzugsweise werden auch in einer solchen Verbundwerkstoffanordnung (1) mit unterschiedlich orientierten Faserhauptrichtungen die Verstärkungsfaserlagen (7) und (8) in einer Matrix auszuwählen auf Basis eines thermoplastischen Polymers, bevorzugt in einer Matrix auf Basis eines thermoplastischen Polymers auszuwählen aus der Gruppe der thermoplastischen Polyurethane, der thermoplastischen Elastomere, der thermoplastischen Polyolefine, der Silikone, der Polyacrylate, der Polyamide, der Nitril- oder Butylkautschuke und der Styrolblockcopolymere, eingesetzt.

Vorzugsweise sind auch in einer solchen Verbundwerkstoffanordnung (1) mit unterschiedlich orientierten Faserhauptrichtungen die Verstärkungsfaserlagen (7) und (8) vollständig in der Matrix eingekapselt. Besonders bevorzugt weist auch eine solche Verbundwerkstoffanordnung (1) mit unterschiedlich orientierten Faserhauptrichtungen weniger als 3 Gew.-% Lufteinschlüsse auf.

Noch weitere bevorzugte Ausführungsformen der vorliegenden Erfindung werden für den Fachmann aus der folgenden detaillierten Beschreibung der Zeichnungen sowie den genannten Beispielen ersichtlich. Hierin werden Ausführungsformen der Erfindung beschrieben, die den besten Modus veranschaulichen, der zur Ausführung der Erfindung in Betracht gezogen wird. Wie zu erkennen ist, ist die Erfindung in der Lage, alternative und verschiedene Ausführungsformen zu bilden und ihre verschiedenen Merkmale erlauben verschiedenste Modifikationen auszuführen. Dementsprechend sind die Zeichnungen und die Beschreibung als veranschaulichend und nicht als einschränkend zu betrachten.

Mindestens eine der dargestellten Ausführungsformen stellt eine Anordnung bereit, die in Schuhwerk, in orthopädischen Anwendungen, in Sportausrüstungen und/oder anderen Produkten verwendbar ist. Die Erfindung betrifft deshalb auch Schuhwerk, orthopädische Anwendungen, Sportausrüstungen und/oder andere Produkte enthaltend wenigstens eine der oben dargestellten Verbundwerkstoffanordnungen.

### Schuhwerk, orthopädische Anwendungen, Sportausrüstungen und/oder andere Produkte

Gegenstand der vorliegenden Erfindung sind deshalb auch Schuhwerk, orthopädische Anwendungen, Sportausrüstungen und/oder andere Produkte enthaltend eine Verbundwerkstoffanordnung (1), umfassend
a. wenigstens eine erste Verstärkungsfaserlage (7),
b. wenigstens eine zweite Verstärkungsfaserlage (8),
c. eine Matrix aus einem thermoplastischen Polymer, in der die wenigstens eine erste Verstärkungsfaserlage (7) und die wenigstens eine zweite Verstärkungsfaserlage (8) eingebettet sind,
wobei senkrecht zur Dickenrichtung der Verbundwerkstoffanordnung (1) keine Symmetrieebene vorhanden ist, an der sich der Lagenaufbau aus wenigstens einer ersten Verstärkungsfaserlage (7) und wenigstens einer zweiten Verstärkungsfaserlage (8) spiegeln lässt, die Verstärkungsfasern aus unterschiedlichen Werkstoffen bestehen oder in unterschiedlicher textiler Form vorliegen und mit der Maßgabe, dass Spiegeln eine Kongruenzabbildung der geometrischen Form anhand der Symmetrieebene bedeutet.

Gegenstand der vorliegenden Erfindung sind auch Schuhwerk, orthopädische Anwendungen, Sportausrüstungen und/oder andere Produkte enthaltend eine Verbundwerkstoffanordnung (1), umfassend
a. wenigstens eine **erste Schicht** mit wenigstens einer Verstärkungsfaserlage (7),
b. wenigstens eine **zweite Schicht** mit wenigstens einer Verstärkungsfaserlage (8),
c. eine Matrix aus einem thermoplastischen Polymer, in der die Verstärkungsfasern der wenigstens einen ersten Schicht mit wenigstens einer Verstärkungsfaserlage (7) und der wenigstens einen zweiten Schicht mit wenigstens einer Verstärkungsfaserlage (8) eingebettet sind,
indem senkrecht zur Dickenrichtung der Verbundwerkstoffanordnung (1) keine Symmetrieebene vorhanden ist, an der sich der Lagenaufbau aus wenigstens der einen ersten Schicht Verstärkungsfaserlage (7) und der wenigstens einen zweiten Schicht Verstärkungsfaserlage (8) spiegeln lässt, wobei die Verstärkungsfasern aus unterschiedlichen Werkstoffen bestehen oder in unterschiedlicher textiler Form vorliegen **und die wenigstens eine zweite Schicht mit wenigstens einer Verstärkungsfaserlage (8) sich im mechanischen Spannungs-Dehnungsverhalten von der wenigstens einen ersten Schicht mit wenigstens einer Verstärkungsfaserlage (7) unterscheidet** mit der Maßgabe, dass Spiegeln eine Kongruenzabbildung der geometrischen Form anhand der Symmetrieebene bedeutet.

Erfindungsgemäß umfasst sind aber auch Schuhwerk, orthopädische Anwendungen, Sportausrüstungen und/oder andere Produkte enthaltend eine Verbundwerkstoffanordnung (1) in denen wenigstens eine erste **Schicht** mit wenigstens einer ersten Verstärkungsfaserlage (7) in Form von Geweben, Gelegen oder Fasermatten **mit einem ersten gemäß ISO 527-1 zu bestimmenden Zugmodul** und wenigstens eine zweite **Schicht mit** wenigstens einer zweiten Verstärkungsfaserlage (8) in Form von Geweben, Gelegen oder Fasermatten **mit einem zweiten gemäß ISO 527-1 zu bestimmenden Zugmodul** vorliegen und die wenigstens eine erste Verstärkungsfaserlage (7) und die wenigstens eine zweite Verstärkungsfaserlage (8) **unterschiedlich orientierte Faserhauptrichtungen** aufweisen.

Gegenstand der vorliegenden Erfindung sind deshalb auch Schuhwerk, orthopädische Anwendungen, Sportausrüstungen und/oder andere Produkte enthaltend eine Verbundwerkstoffanordnung (1), umfassend
a. wenigstens eine erste Verstärkungsfaserlage (7) in Form von Geweben, Gelegen oder Fasermatten **mit einem ersten gemäß ISO 527-1 zu bestimmenden Zugmodul,**
b. wenigstens eine zweite Verstärkungsfaserlage (8) in Form von Geweben, Gelegen oder Fasermatten **mit einem zweiten gemäß ISO 527-1 zu bestimmenden Zugmodul,**
c. eine elastisch verformbare Matrix aus einem thermoplastischen Polymer, in der die Verstärkungsfasern der wenigstens einen ersten Verstärkungsfaserlage (7) und der wenigstens einen zweiten Verstärkungsfaserlage (8) eingebettet sind, wobei senkrecht zur Dickenrichtung der Verbundwerkstoffanordnung (1) keine Symmetrieebene vorhanden ist, an der sich der Lagenaufbau aus der wenigstens einen ersten Verstärkungsfaserlage (7) und der wenigstens einen zweiten Verstärkungsfaserlage (8) spiegeln lässt und die Verstärkungsfasern aus unterschiedlichen Werkstoffen bestehen oder in unterschiedlicher textiler Form vorliegen und der zweite Zugmodul grösser oder gleich dem ersten Zugmodul ist und die wenigstens eine erste Verstärkungsfaserlage (7) und die wenigstens eine zweite Verstärkungsfaserlage (8) **über einen gleichen oder ähnlichen Wärmeausdehnungskoeffizienten** verfügen mit der Maßgabe, dass Spiegeln eine Kongruenzabbildung der geometrischen Form anhand der Symmetrieebene bedeutet.

Erfindungsgemäß umfasst sind aber auch Schuhwerk, orthopädische Anwendungen, Sportausrüstungen und/oder andere Produkte enthaltend eine Verbundwerkstoffanordnung (1) in denen wenigstens eine erste **Schicht** wenigstens einer ersten Verstärkungsfaserlage (7) in Form von Geweben, Gelegen oder Fasermatten mit einem ersten gemäß ISO 527-1 zu bestimmenden Zugmodul und wenigstens eine zweite **Schicht** wenigstens einer zweiten Verstärkungsfaserlage (8) in Form von Geweben, Gelegen oder Fasermatten mit einem zweiten gemäß ISO 527-1 zu bestimmenden Zugmodul vorliegen und die wenigstens eine erste Schicht mit Verstärkungsfaserlage(n) (7) und die wenigstens zweite Schicht mit Verstärkungsfaserlage(n) (8) über einen gleichen oder ähnlichen Wärmeausdehnungskoeffizienten verfügen.

Gegenstand der vorliegenden Erfindung sind deshalb auch Schuhwerk, orthopädische Anwendungen, Sportausrüstungen und/oder andere Produkte enthaltend eine Verbundwerkstoffanordnung (1) umfassend
a. wenigstens eine erste Verstärkungsfaserlage (7) in Form von Geweben, Gelegen oder Fasermatten mit einem ersten, gemäß ISO 527-1 zu bestimmenden Zugmodul,
b. wenigstens eine zweite Verstärkungsfaserlage (8) in Form von Geweben, Gelegen oder Fasermatten mit einem zweiten, gemäß ISO 527-1 zu bestimmenden Zugmodul, und
c. eine elastisch verformbare Matrix aus einem thermoplastischen Polymer, in der die Verstärkungsfasern der wenigstens einen ersten Verstärkungsfaserlage (7) und der wenigstens einen zweiten Verstärkungsfaserlage (8) eingebettet sind,
wobei senkrecht zur Dickenrichtung der Verbundwerkstoffanordnung (1) keine Symmetrieebene vorhanden ist, an der sich der Lagenaufbau aus wenigstens der einen ersten Verstärkungsfaserlage (7) und der wenigstens einen zweiten Verstärkungsfaserlage (8) spiegeln lässt und die Verstärkungsfasern aus unterschiedlichen Werkstoffen bestehen oder in unterschiedlicher textiler Form vorliegen und der zweite, im Zugversuch nach DIN EN ISO 527 zu bestimmende Zugmodul grösser oder gleich dem ersten, im Zugversuch nach DIN EN ISO 527 zu bestimmenden Zugmodul ist und die wenigstens eine erste Verstärkungsfaserlage (7) und die wenigstens eine zweite Verstärkungsfaserlage (8) **unterschiedlich orientierte Faserhauptrichtungen** aufweisen mit der Maßgabe, dass Spiegeln eine Kongruenzabbildung der geometrischen Form anhand der Symmetrieebene bedeutet.

Die vorliegende Erfindung betrifft zudem die Verwendung einer der oben beschriebenen Ausführungsformen von Verbundwerkstoffanordnungen (1) in Schuhwerk, orthopädischen Anwendungen, Sportausrüstungen und/oder anderen Produkten eingesetzt werden.

Zur Klarstellung sei schließlich angemerkt: Die im Rahmen der vorliegenden Erfindung bereitgestellten Darstellungen dienen nur der Veranschaulichung und beeinflussen nicht notwendigerweise den Umfang oder die Bedeutung der beanspruchten Ausführungsformen. Gleiche Bezugszeichen in den Zeichnungen stehen für identische oder funktional ähnliche Elemente. Die Zeichnungen sind nicht notwendigerweise maßstabsgetreu gezeichnet. Zum Beispiel können die Abmessungen einiger Elemente in den Figuren erweitert oder reduziert werden, um zu helfen, das Verständnis der Ausführungsformen zu verbessern. Während die vorliegende Erfindung verschiedene Modifikationen und alternativen Formen erlaubt, sind darüber hinaus spezifische Ausführungsformen beispielhaft in den Zeichnungen gezeigt und werden nachstehend ausführlich beschrieben. Die Erfindung soll jedoch die beschriebenen Ausführungsformen nicht einschränken, sondern vielmehr alle Ausführungsformen, alle Modifikationen, Äquivalente und Alternativen abdecken, die in den Umfang der Ausführungsformen fallen.

### Figuren

Die folgende Beschreibung und die Figuren stellen spezifische Details für ein Verständnis der Erfindung und der Beispiele bereit. Der Fachmann wird jedoch verstehen, dass die im Rahmen der vorliegenden Erfindung dargestellten Techniken auch ohne solche Details praktiziert werden können. Gleichermaßen wird ein Fachmann auch verstehen, dass die vorliegende Erfindung auch Merkmale umfassen kann, die nicht im Detail beschrieben werden. Zusätzlich können einige dem Fachmann ohnehin gut bekannte Strukturen oder Funktionen nachstehend nicht im Detail gezeigt oder beschrieben werden.

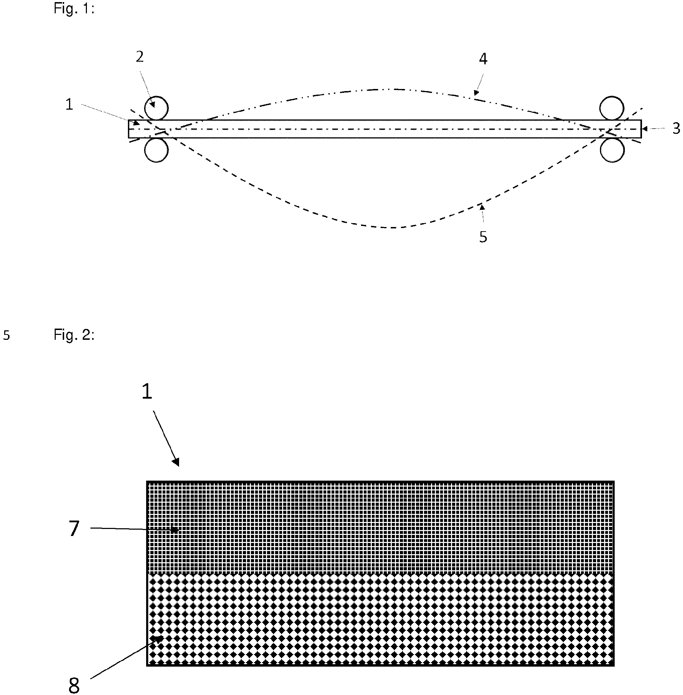

Die im Rahmen der vorliegenden Erfindung verwendete Terminologie soll in ihrer breitesten Weise ausgelegt werden, obwohl sie in Verbindung mit einer detaillierten Beschreibung einiger spezifischer Beispiele der Ausführungsformen verwendet wird. **Fig. 1** zeigt eine faserverstärkte Verbundwerkstoffanordnung (1), die z.B. eine Schuhsohle sein kann, mit abstimmbaren anisotropen Eigenschaften, die in einer ebenen, nicht gebogenen Konfiguration gemäß einer Ausführungsform der vorliegenden Erfindung dargestellt ist. **Fig. 1** veranschaulicht die Verbundwerkstoffanordnung (1) in durchgezogenen Linien in einer flachen, entspannten Position (3) und in Phantomlinien in einer Aufwärtsablenkkonfiguration (4) und einer Abwärtsablenkkonfiguration (5), die durch eine Kraftbeaufschlagung erzeugt wird, während die Verbundwerkstoffanordnung (1) in einer Fixierung (2) eingespannt ist.

**Fig. 2** zeigt eine erfindungsgemäße, anisotrope Verbundwerkstoffanordnung (1). Diese anisotrope Verbundwerkstoffanordnung (1) weist eine erste Verstärkungsfaserlage (7) und eine zweite Verstärkungsfaserlage (8), jeweils in Form von Geweben, Gelegen oder Fasermatten, auf. Die Verstärkungsfaserlagen (7) und (8) unterscheiden sich dabei z.B. in der Art des Faserwerkstoffes, der Faserorientierung, der Textilform oder einer Kombination aus diesen Merkmalen. Beide Verstärkungsfaserlagen (7) und (8) sind in einer elastisch verformbaren Matrix eingekapselt und bilden so zusammen die Verbundwerkstoffanordnung (1). Bei bestimmten Ausführungsformen der vorliegenden Technologie kann die Verbundwerkstoffanordnung (1) auch aus mehr als zwei Verstärkungsfaserlagen bestehen.

Es wird angemerkt, dass die Begriffe "oben" und "unten" zu Zwecken des Verständnisses bzw. zur Erörterung der Ausrichtung verwendet werden, wobei der Fachmann versteht, dass die Anordnung in anderen räumlichen Orientierungen ebenfalls positioniert werden kann.

Die Fasern der ersten Verstärkungsfaserlage (7) und der zweiten Verstärkungsfaserlage (8) können in einer Ausführungsform anorganische, organische oder synthetische Fasern sein.

Vorzugsweise werden im Rahmen der vorliegenden Erfindung die Fasern der ersten Verstärkungsfaserlage (7) und die Fasern der zweiten Verstärkungsfaserlage (8) ausgewählt aus der Gruppe der Kohlenstofffasern, der Glasfasern, der Keramikfasern, der Metallfasern, der Polymerfasern und der Naturfasern. Die Erfindung umfasst auch Kombinationen von Fasern. Die Fasern in der ersten Verstärkungsfaserlage (7) bzw. der ersten Schicht können sich von den Fasern der zweiten Verstärkungsfaserlage (8) bzw. der zweiten Schicht unterscheiden, sie können aber auch identisch sein. Bevorzugte Polymerfasern basieren auf Polyamiden, Polyestern oder Kombinationen davon. Insbesondere bevorzugt ist Nylon.

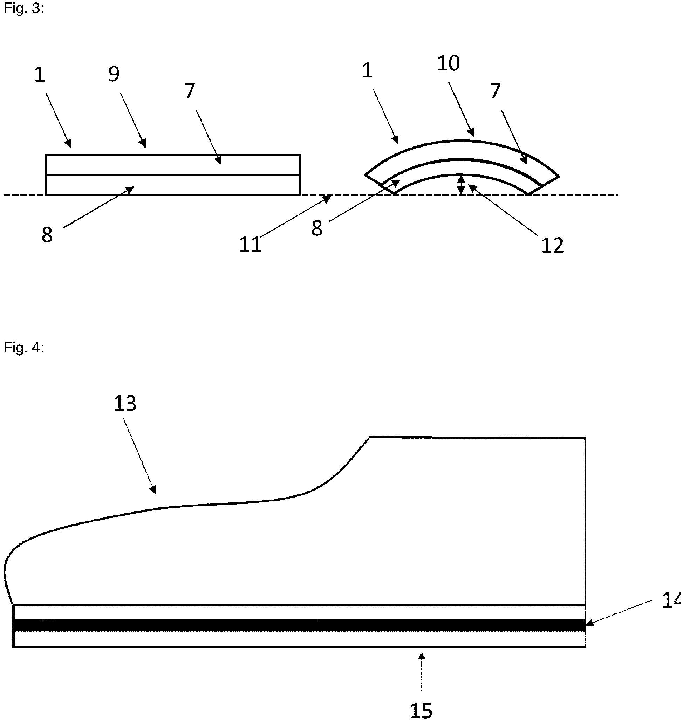

**Fig. 3** zeigt eine Verbundwerkstoffanordnung (1) mit wenigstens der ersten Verstärkungsfaserlage (7) und der zweiten Verstärkungsfaserlage (8) im ebenen Zustand (9). Dieser Zustand liegt im Rahmen der vorliegenden Erfindung vor, wenn bei der Herstellung der Verbundwerkstoffanordnung (1) wenigstens eine Presse, vorzugsweis eine Presse aus der Gruppe Doppelbandpresse, Intervallheizpresse und statische Presse eingesetzt wird. Vorteil dieser Verbundwerkstoffanordnung ist die Möglichkeit der Weiterverarbeitung in beliebigen Fertigungsverfahren.

Die Ebenheit einer erfindungsgemäßen Verbundwerkstoffanordnung (1) wird über die Höhe des Freiraums zwischen Verbundwerkstoffanordnung und Auflagefläche bestimmt. Als Beispiel ist dazu in **Fig. 3** eine unebene Verbundwerkstoffanordnung (1) mit wenigstens der ersten Verstärkungsfaserlage (7) und der zweiten Verstärkungsfaserlage (8) gezeigt, die nach der Herstellung mittels Doppelband-, Intervallheiz- oder statischer Presse zunächst (linke Darstellung) in einem ebenen, dann aber in einem verformten Zustand (10) (rechte Darstellung) vorliegt. Die Höhe des Freiraums (12) zwischen Verbundwerkstoffanordnung und Auflagefläche liegt in allen Ausführungsformen der vorliegenden Erfindung im Bereich von 0 bis 5 mm, womit der ebene Zustand (9) eine besondere Form des verformten Zustands (10) ist.

Eine erfindungsgemäße Verbundwerkstoffanordnung (1) in allen genannten Ausführungsformen stellt einen sogenannten anisotrop-flexiblen Biegebalken dar und erlaubt eine Vielzahl technischer Anwendungen. Vorzugsweise wird eine Verbundwerkstoffanordnung (1) verwendet, um eine Komponente in einem in **Fig. 4** gezeigten Schuhwerk (13) zu bilden. Es ist bekannt, dass das Potential für eine Fußverletzung mit erhöhter Flexibilität des Schuhwerks bzw. mit erhöhter Flexibilität seiner Sohle einhergeht. Der Schutz eines Fußes über die Sohlenanordnung des Schuhwerks kann durch die Verwendung von nicht-steifem Material verringert werden. Um einem solchen potentiellen reduzierten Schutz entgegenzuwirken, kann die Verbundwerkstoffanordnung (1) als eine Komponente (14) der Sohlenanordnung (15) eines Schuhwerks oder als Einlegesohle verwendet werden. In diesem Fall wird eine anisotrope Biegung ermöglicht und eine starre, dünne Substratschicht, die auf die Boden- oder Plantar-Seite des Schuhwerks aufgebracht wird, kann seitliche Kräfte dissipieren. Die Verbundwerkstoffanordnung (1) kann auch in Schuhwerk eingebaut werden, um eine erhöhte Flexibilität im Wesentlichen ohne Beeinträchtigung der Stabilität und des Schutzes bereitzustellen. Eine Verbundwerkstoffanordnung (1) in Form der Sohlenanordnung (15) der vorliegenden Erfindung ermöglicht eine stark abstimmbare Biegeflexibilität, ohne die Stabilität und/oder den Schutz eines Fußes zu reduzieren. Die erhöhte Flexibilität hilft dabei, die Kräfte zu verringern, die durch den Fuß erforderlich sind, um das Schuhwerk (13) zu biegen, wodurch Ermüdung des Trägers eines solchen Schuhwerks reduziert wird.

Während der Verwendung eines Schuhwerks, insbesondere beim Laufen, Wandern, Gehen, Leiternsteigen usw., wird die Sohlenanordnung oft unebenen Oberflächen, insbesondere Steinen, Leitersprossen, spitzen Gegenständen oder anderen Unebenheiten, ausgesetzt. Derartige Oberflächen können in der Sohle eines Schuhwerks lokal Kräfte erzeugen, die auf die Unterseite des Fußes des Trägers wirken. Diese lokal auftretenden Kräfte können den Fuß des Trägers eines solchen Schuhwerks belasten und Druck, Überdehnung oder andere Unbehagen auslösen. Eine erfindungsgemäße Sohlenanordnung (15) mit integrierter anisotroper Verbundwerkstoffanordnung (1) in Form einer Plattenanordnung (14) verringert die lokal auftretenden Kräfte durch einen hohen Widerstand gegen Biegung in der Plantar-Biegerichtung und erhöht dadurch den Laufkomfort.

Insbesondere bevorzugt ist eine Verbundwerkstoffanordnung (1) basierend auf Polypropylen als Matrixkunststoff, wobei die erste Verstärkungsfaserlage aus einem Gewebe aus Glasfasern und die zweite Verstärkungsfaserlage aus einem Gewebe aus Aramidfasern besteht. Überraschend wurde mit einem solchen Aufbau einer erfindungsgemäßen Verbundwerkstoffanordnung gefunden, dass zusätzlich eine besonders gute Durchstichsicherheit erzielt werden konnte, wodurch die Sicherheit des Trägers eines darauf basierenden Schuhwerks bzw. seines Fußes zusätzlich verbessert wurde. Dies ist in **Tab. 2** am Beispiel einer Verbundwerkstoffanordnung mit einer Dicke von 1.0 mm und einem Faservolumengehalt von 45% dargestellt. Je größer die maximale Durchstichkraft, desto höher ist die Durchstichsicherheit.

**Tab. 2**

| Verstärkungsfaserlage 1 | Verstärkungsfaserlage 2 | max. Durchstichkraft [N] |
|---|---|---|
| Carbon | Carbon | 400 |
| Glas | Glas | 392 |
| Aramid | Aramid | 439 |
| Carbon | Aramid | 405 |
| Glas | Aramid | 636 |

Insbesondere bevorzugt ist aber auch eine Verbundwerkstoffanordnung (1) basierend auf einer Matrix aus TPU = thermoplastisches Polyurethan mit einer ersten Verstärkungsfaserlage aus einem Gewebe aus Carbonfaser und einer zweiten Verstärkungsfaserlage aus einem Gewebe aus Aramidfasern. In dieser besonderen Ausführung haben beide Verstärkungsfasern einen negativen Wärmeausdehnungskoeffizienten und eignen sich besonders gut, um unterschiedliche Biegeeigenschaften in eine nach oben gerichtete Ablenkungsrichtung und eine nach unten gerichtete Ablenkungsrichtung zu erzeugen. Überraschend wurde damit gefunden, dass die Biegefestigkeit stärker durch die Ablenkungsrichtung verändert wird, als die Biegesteifigkeit. Damit ist ein solcher Aufbau besonders geeignet, um in eine Richtung Flexibilität und in die andere Richtung erhöhte Sicherheit zu gewährleisten.

**Tab. 3** zeigt die Biegesteifigkeit einer Verbundwerkstoffanordnung gemäß des auf TPU, Carbonfaser und Aramidfaser basierenden Beispiels, wobei die Dicke des Materials 0.75 mm und der Faservolumengehalt 50% betrug.

**Tab. 3**

| Eigenschaft | Biegerichtung nach oben | Biegerichtung nach unten |
|---|---|---|
| Biegesteifigkeit [GPa] | 34,8 | 36,4 |
| Biegefestigkeit [MPa] | 480 | 696 |

Eine erfindungsgemäße Verbundwerkstoffanordnung (1) kann in anderen Anwendungen verwendet werden, um die Vorteile eines geringen Widerstands gegen Biegung in eine Richtung und einen hohen Widerstand gegen Biegung in eine andere Richtung zu erzielen. Vorzugsweise könnte eine solche erfindungsgemäße Verbundwerkstoffanordnung (1) in athletischen Ausrüstungen eingebaut werden, um die Leistungsfähigkeit eines Sportlers zu steigern oder dem Ermüden des Sportlers entgegen zu wirken. Eine erfindungsgemäße asymmetrische Verbundwerkstoffanordnung (1) kann deshalb bevorzugt in Gelenkbereichen von Prothesen, in Rücken- oder Gelenkstreben und Stützen, die in andere medizinische Geräte integriert sind, angewandt werden.

Eine erfindungsgemäße Verbundwerkstoffanordnung (1) kann als ein Schutzelement verwendet werden, das die übermäßige Biegung eines Benutzers in eine unerwünschte Richtung verhindert, während es eine Biegung in eine entgegengesetzte Richtung ermöglicht, gleichzeitig aber in wenigstens einer der beschriebenen besonderen Ausführungsformen auch als Schutzelement gegen Stich- oder Schneidverletzungen wirkt. Eine Bewegung der Gliedmaßen und Gelenke eines menschlichen Körpers außerhalb ihres erwarteten Bewegungsbereichs ist dem Fachmann als Hyperextension bekannt. Eine solche Hyperextension zeichnet sich durch eine Bewegung über die normalen Grenzen der Winkel -, Dreh- oder Gleitbewegung hinaus in Abhängigkeit von den beteiligten anatomischen Strukturen aus. Eine erfindungsgemäße Verbundwerkstoffanordnung (1) kann deshalb in einem Sportschuhwerk, insbesondere in Rugby- oder Fußballschuhen, integriert werden. Sportschuhwerk ist normalerweise so konfiguriert, sich mit dem Fuß eines Benutzers in eine Richtung während eines normalen Lauf- oder Gehstoßes zu biegen, die Steifigkeit und den Widerstand gegen Biegung in die entgegengesetzte Richtung jedoch beizubehalten. Eine oder mehrere Ausführungsformen einer erfindungsgemäßen Verbundwerkstoffanordnung (1) können speziell auf sportliche Anwendungen und/oder auf bestimmte Athleten oder Benutzer abgestimmt werden. In einem solchen Fall ist eine erfindungsgemäße Verbundwerkstoffanordnung (1) in einem Schuhwerk auf der Grundlage einer bestimmten individuellen Muskelskelettcharakteristik, wie etwa Metatarsophalangeal (MTP), zu verwenden, wobei das Schuhwerk auf den Bewegungsbereich und die Verlängerungsgeschwindigkeit während des Laufens abgestimmt wird, um so eine progressive Biegesteifigkeit für den Sportler bereitzustellen und die physikalische Leistung des Sportlers zu verbessern. Das Abstimmen von Schuhwerk im Hinblick auf die Steifigkeit sowie den jeweiligen Eigenschaften eines Läufers kann zur Leistungssteigerung herangezogen werden. Eine erfindungsgemäße Verbundwerkstoffanordnung (1) erlaubt die Steifigkeit auf verschiedene Phasen eines Laufens, insbesondere bei der Beschleunigung, beim Springen oder beim Jogging gezielt einzustellen und damit die Laufleistung seines Trägers bzw. des Sportlers zu optimieren.

Hyperextension kann aufgrund der erhöhten Belastung und von Kräften, die auf Bänder und Bindegewebe ausgeübt werden, zu einer physischen Verletzung führen. Das Risiko einer Verletzung durch Hyperextension kann durch die Verwendung von Schutzausrüstung, die die Bewegung der verschiedenen Gliedmaßen und Gelenke des Körpers, ob Bügel, Armlehnen, Finger, Knie, Zehen, Hüfte oder andere anatomische Strukturen, in ihren normalen Bereich der erwarteten Bewegung behindern oder einschränkt, signifikant verringert werden.

Dementsprechend erzielt eine erfindungsgemäße Verbundwerkstoffanordnung (1) in einem Schuhwerk bzw. in einem Schuheinsatz, den Bedarf des Schutzes aller Zehen eines Fußes vor Hyperextensionen, während ein Biegen der Zehen durch den normalen Bewegungsbereich ermöglicht wird, ohne den Punkt der Hyperextension zu erreichen. Eine erfindungsgemäße Verbundwerkstoffanordnung (1) in einem Schuhwerk bzw. in einem Schuheinsatz kann deshalb als Schutzausrüstung dienen, die die Körperbewegung, nicht nur der Zehen, innerhalb eines normalen Bereichs der zu erwartenden Bewegung hält, ohne die normale freie Bewegung bis zu den Grenzen der Hyperextension einzuschränken. Eine erfindungsgemäße Verbundwerkstoffanordnung (1) in einem Schuhwerk bzw. in einem Schuheinsatz bewirkt zusätzlich zu den o.g. Punkten einen Schutz gegen Stich- und Schnittverletzungen zum Beispiel bei Sportarten, die in offenem Gelände durchgeführt werden.

Die Erfindung betrifft deshalb auch die Verwendung einer der oben beschriebenen Ausführungsformen von Verbundwerkstoffanordnungen (1) in Schuhwerk zur Verhinderung von Hyperextensionen oder zum Schutz gegen Stich- und Schnittverletzungen.

## Patentansprüche

1. Verbundwerkstoffanordnung (1), umfassend
a. wenigstens eine erste Verstärkungsfaserlage (7),
b. wenigstens eine zweite Verstärkungsfaserlage (8),
c. eine Matrix aus einem thermoplastischen Polymer, in der die wenigstens eine erste Verstärkungsfaserlage (7) und die wenigstens eine zweite Verstärkungsfaserlage (8) eingebettet sind,
**dadurch gekennzeichnet, dass** senkrecht zur Dickenrichtung der Verbundwerkstoffanordnung (1) keine Symmetrieebene vorhanden ist, an der sich der Lagenaufbau aus wenigstens einer ersten Verstärkungsfaserlage (7) und wenigstens einer zweiten Verstärkungsfaserlage (8) spiegeln lässt, die Verstärkungsfasern aus unterschiedlichen Werkstoffen bestehen oder in unterschiedlicher textiler Form vorliegen mit der Maßgabe, dass Spiegeln eine Kongruenzabbildung der geometrischen Form anhand der Symmetrieebene bedeutet.

2. Verbundwerkstoffanordnung (1) gemäß Anspruch 1, **dadurch gekennzeichnet dass** die wenigstens eine erste Verstärkungsfaserlage (7) und die wenigstens eine zweite Verstärkungsfaserlage (8) jeweils in Form einer Schicht vorliegen und die wenigstens eine zweite Schicht mit wenigstens einer zweiten Verstärkungsfaserlage (8) sich im mechanischen Spannungs-Dehnungsverhalten von der wenigstens einen ersten Schicht mit wenigstens einer ersten Verstärkungsfaserlage (7) unterscheidet.

3. Verbundwerkstoffanordnung (1) gemäß Anspruch 1 oder 2, **dadurch gekennzeichnet, dass** die wenigstens eine erste Verstärkungsfaserlage (7) in Form von Geweben, Gelegen oder Fasermatten einen ersten gemäß ISO 527-1 zu bestimmenden Zugmodul und die wenigstens eine zweite Verstärkungsfaserlage (8) in Form von Geweben, Gelegen oder Fasermatten einen zweiten gemäß ISO 527-1 zu bestimmenden Zugmodul aufweist und der zweite Zugmodul grösser oder gleich dem ersten Zugmodul ist und die wenigstens eine erste Verstärkungsfaserlage (7) und die wenigstens eine zweite Verstärkungsfaserlage (8) über einen gleichen oder ähnlichen Wärmeausdehnungskoeffizienten verfügen, vorzugsweise einen Unterschied der Wärmeausdehnungskoeffizienten von maximal ± 1·10⁻⁵ 1/K aufweisen.

4. Verbundwerkstoffanordnung (1) gemäß Anspruch 3, **dadurch gekennzeichnet, dass** die wenigstens eine erste Verstärkungsfaserlage (7) und die wenigstens eine zweite Verstärkungsfaserlage (8) unterschiedlich orientierte Faserhauptrichtungen aufweisen.

5. Verbundwerkstoffanordnung (1) gemäß einem oder mehreren der Ansprüche 1 bis 4, **dadurch gekennzeichnet, dass** diese abstimmbare anisotrope Eigenschaften aufweist.

6. Verbundwerkstoffanordnung (1) gemäß Anspruch 5, **dadurch gekennzeichnet, dass** diese einen geringen Widerstand gegen Biegung in eine Richtung und einen hohen Widerstand gegen Biegung in eine andere Richtung aufweist.

7. Verbundwerkstoffanordnung (1) gemäß einem oder mehreren der Ansprüche 1 bis 6, **dadurch gekennzeichnet, dass** die Matrix, in der die Verstärkungsfaserlagen eingebettet sind, aus der Gruppe der thermoplastischen Polyurethane, thermoplastischen Elastomere, thermoplastischen Polyolefine, Silikone, Acrylate, Polyamide, Polyester, Polybutadienterephtalate, Polycarbonate, Polyphenylensulfide, Polyetherimide, Poletheretherketone, Polylactide, Polyetherterephtalate, Polyurethane, Nitril- und Butylkautschuke und Styrolblockcopolymere gewählt wird.

8. Verbundwerkstoffanordnung (1) gemäß einem oder mehreren der Ansprüche 1 bis 7, **dadurch gekennzeichnet dass** die Verstärkungsfaserlagen vollständig in der Matrix eingekapselt sind.

9. Verbundwerkstoffanordnung (1) gemäß einem oder mehreren der Ansprüche 1 bis 8, **dadurch gekennzeichnet, dass** weniger als 3% Lufteinschlüsse enthalten sind.

10. Verbundwerkstoffanordnung (1) gemäß einem oder mehreren der Ansprüche 1 bis 9, **dadurch gekennzeichnet, dass** das Einkapseln der Verstärkungsfaserlagen in die Matrix in einer Doppelbandpresse, Intervallheizpresse oder statischen Presse bei hohem Druck und hoher Temperatur erfolgt.

11. Verbundwerkstoffanordnung (1) gemäß Anspruch 10, **dadurch gekennzeichnet, dass** das Einkapseln der Verstärkungsfaserlagen (7) und (8) in die Matrix aus thermoplastischem Polymer bei einem Druck >10 bar erfolgt.

12. Verbundwerkstoffanordnung (1) gemäß Anspruch 10 oder 11, **dadurch gekennzeichnet dass** das Einkapseln der Verstärkungsfaserlagen (7) und (8) in die Matrix aus thermoplastischem Polymer bei Temperaturen wenigstens 5°C oberhalb der Kristallitschmelztemperatur des zu verarbeitenden und als Matrix einzusetzenden thermoplastischen Polymers bzw. wenigstens 5°C oberhalb der Kristallitschmelztemperatur des einzusetzenden teilkristallinen thermoplastischen Kunststoffes, oder wenigstens 5°C oberhalb der Glasübergangstemperatur des zu verarbeitenden amorphen thermoplastischen Kunststoffes erfolgt.

13. Verbundwerkstoffanordnung (1) gemäß einem oder mehreren der Ansprüche 10 bis 12, **dadurch gekennzeichnet, dass** diese im ebenen Zustand (9) in Form einer Halbzeugplatte vorliegt.

14. Schuhwerk, orthopädische Anwendungen, Sportausrüstungen und/oder andere Produkte enthaltend eine Verbundwerkstoffanordnung (1) gemäß einem oder mehreren der Ansprüche 1 bis 13.

15. Verwendung einer Verbundwerkstoffanordnung (1) gemäß einem oder mehreren der Ansprüche 1 bis 13, **dadurch gekennzeichnet, dass** diese in Schuhwerk, orthopädischen Anwendungen, Sportausrüstungen und/oder anderen Produkten eingesetzt werden.
